# EUROPEAN PATENT SPECIFICATION

(11) **EP 1 589 755 B1**
(45) Date of publication and mention of the grant of the patent: **03.10.2007**
(21) Application number: 05103074.0
(22) Date of filing: 18.04.2005
(51) Int. Cl.: H04N 7/00, H04N 5/46, H04N 5/50

(54) **Receiver of analogue and digital television signals and method of receiving analogue and digital signals**
Empfänger für analoge und digitale Fernsehsignale und Empfangsverfahren für analoge und digitale Signale
Récepteur des signaux de télévision analogique et numérique et procédé de réception des signaux de télévision analogique et numérique

(30) Priority: 20.04.2004 PL 36740904
(43) Date of publication of application: 26.10.2005
(73) Proprietor: Advanced Digital Broadcast Polska Spolka z o.o., 65-119 Zielona Gora (PL); Advanced Digital Broadcast Ltd., Hsin-Tien City Taipei County 231 (TW)
(72) Inventor: Dabrowa, Andrzej Adv.Digital Broadcast P.S.z o.o., 65-119 Zielona Gora (PL)
(74) Representative: Hudy, Ludwik

(56) References cited:
- WO-A-01/93585
- US-A- 6 115 080
- US-A1- 2003 046 713
- US-A1- 2003 097 656
- US-B1- 6 483 553

## Description

The present invention relates to a receiver of analogue and digital television signals and a method of receiving analogue and digital signals.

In order to send analogue and digital television signals, the producers of television receivers were required to design receivers, which could receive both analogue and digital signals or process television signals received from a wide range of sources, for example via cable and satellite networks.

A solution of such type of receiver is known from the state of the art as presented in the publication of the international patent application no. WO 03/056828 A1 entitled *"Transparent access of STB MHP digital TV middleware to IP video content".* This application presents a method of creating information that describes the broadcast programs - SI (*Service Information*) in the DVB standard, which is used in digital television (satellite, cable, terrestrial), based on information delivered in another format via the IP (Internet Protocol) network. By means of methods as described in this application, in an electronic program guide EPG (under the English full name of *Electronic Program Guide*) software, operating on MHP platform (with the full English name of *Multimedia Home Platform*), data received in the DVB SI (Digital Video Broadcasting - Service Information) standard and data received from the IP network in another format, may be processed in the same way as the DVB SI data

In addition, methods and systems for providing digital services such as video-on-demand (VOD), digital broadcast, and time shifting from any broadcasting medium, as well as a universal STB capable of handling this variety of digital broadcasting, are known form the international patent application no. WO 01/93585 A1 entitled *"Universal digital broadcast system and methods".* In the described systems, digital services are provided via a uni-directional communications link over a plurality of channels. These channels are suitable for providing one of VOD or digital broadcast whereas others channels may be used for other purposes.

There exists a system that receives both analogue and digital signals, known from the American patent description No. US 5,844,623 entitled *"Television with integrated receiver decoder".* The system decodes a digital satellite signal and converts it into the RGB format (Red, Green, Blue). Additionally, the analogue signal is decoded into an RGB signal. In this embodiment, the system has a circuit for decoding and displaying the signal in the first format, for example NTSC (Eng. National Television System Committee). The television set is also equipped with a second circuit for decoding and displaying the signal in the second format, for example MPEG (abbreviation from the English name *Moving Pictures Experts Group*). The first and the second circuit are interconnected and use a shared memory.

In turn, a method of selecting for further processing a desired television channel suitable for use in a television receiver capable of receiving both analog and digital televisions signals is known from the American patent description no. US 6,115,080 entitled *"Channel selection methodology in A TSC*/*NTSC television receiver",* according to which appropriate user feedback such that channel selection is effected in a relatively rapid manner utilizing one of a direct channel selection, an electronic program guide selection process, a picture in picture montage selection process or a combination thereof.

Furthermore, a combined TV receiver is known from the American patent description no. US 6,483,533 entitled *"TV receiver for digital*/*analog combined use".* This receiver can receive and process an analog broadcasting signal as well as a digital broadcasting signal, and includes a controller determining whether a channel selected by a user is a digital broadcast or an analog broadcast.

Also, there is a method known from the American patent description no. US 6,486,925 entitled *"Channel managing apparatus and method for digital*/*analog TV".* According to this method, the receiver has a possibility of processing television signals from both analogue and digital sources. Information, describing the channels that are available in the received signal sources is stored in the memory of the receiver. A disadvantage of this solution, in comparison to a digital decoder, is the need to introduce different software. Moreover, recording format of data about analogue channels is different than the format for recording information about digital channels, and the analogue channel is described only by providing information about the frequency and type, in this case by stating that it is an analogue type.

A broadcasting receiver comprising a digital receiver and an analog receiver is known from the American patent document no. US 2003/0097656 A1 entitled *"Broadcasting receiver".* An OSD circuit and an adder add video data such as characters produced in the receiver to received video data on a channel tuned in to by the digital tuner whereas a video analog-to-digital processor converts a received video signal on a channel tuned in to by the analog tuner into digital received video data, and the OSD circuit and the adder similarly add the video data such as characters produced in the receiver to the received video data.

In turn, a low-cost digital television set-top-box is known from the American patent document no. US 2003/0046713 A1 entitled *"Simplified digital settop box".* The described set-top-box is provided with built-in digital decoding and analog signal pass-through capabilities. The tuner within an analog television receives passed through analog television channels and digital channels that have been converted to analog signals and placed on a predetermined analog television channel.

The aim of the present invention is to create a simple and cheap device to receive digital and analogue signals, in which information about analogue channels is processed in the same way, as information about digital channels. Moreover, information describing the analogue data, according to the format of digital data description, should be generated within the receiver itself.

The idea of the invention, which is defined in claim 1, is that in a receiver of analogue and digital television signals, which contains an analogue signal receiving block, a digital signal receiving block and blocks for processing digital data to A/V signal, for example, incorporated in a processor, there is a block for emulating analogue channels as digital channels, which is linked to the signal processing block. The block for emulating the analogue channels as digital channels comprises a circuit creating at least a network identifier and a channel identifier, which for the analogue channels are created within the receiver. The receiver also comprises a digital signal receiving block linked to the signal processing block and an analogue signal receiving block linked to the block for emulating analogue channels as digital channels. The analogue signal received by the analogue signal receiving block is passed from the analogue signal receiving block via the block for emulating analogue channels as digital channels to the signal processing block and processed into an output A/V signal passed to the A/V blocks and the digital signal received by the digital signal receiving block is passed from the digital signal receiving block directly to the signal processing block and processed into an output A/V signal passed to the A/V blocks. Moreover an A/V block is linked to the signal processing block for transmitting the output A/V signal to a display device and loudspeakers.

It is favorable that the receiver has also a channel list manager, which stores a database of information about the channels available, which contains information about digital as well as analogue channels. The receiver additionally contains a signal reception controller, which controls signal reception and manages the procedures of handling the analogue channels, decoders of audio and video signals, a controller of television signal receiving blocks, which control the analogue signal receiving block and the digital signal receiving blocks. Additionally, the receiver contains a block for handling teletext or *'closed captions'* data.

Information about channels can contain a stream identifier, which for analogue channels is created within the receiver, preferably in the block for emulating analogue channels as digital channel.

The idea of the invention, additionally defined in claim 5, is also that in the method of receiving analogue and digital television channels, there is a database of information about the analogue and digital channels created in the receiver, in which information about the analogue and digital channels is stored in a homogeneous format, and the signals of analogue television, being continuously received, are converted in the receiver into digital format.

Information about analogue channels can be generated by means of low-level applications. By such means, identification numbers and descriptions can be assigned to the analogue channels, and information about the available digital as well as analogue channels, emulated as digital channels, is stored in the database of information about channels.

Information about the available analogue channels can be fetched from the teletext or *'closed captions'.*

Signals of analogue television can be converted within the receiver into the digital signals by 'audio digitizer' modules for audio signals and 'video digitizer' for video signals.

The middleware software layer can be an MHP system.

Information about the available analogue channels can be stored in the memory of the receiver. Favorably, scanning of the analogue band is started from a request to scan the analogue band to the analogue signal-receiving block, and is next checked whether there was a television channel signal found in the scanned band. If it was not found, the procedure ends. If the channel is found, the procedure notifies a processor about the correct setting of the analogue signal-receiving block to the preset channel. Subsequently, the set frequency is scanned and the channel list manager adds the found channel to the list of channels. Next, the application, which submitted the scanning request, is informed about the termination of frequency scanning. A check is next, made as to whether the end of the bandwidth has been reached and if so, the procedure ends. If the signal lies within the limits of the bandwidth or a band remains unscanned, the procedure reverts to the start-point, that is to the request for band scanning.

The channel can also be added to the signal reception controller list, when there is a logical division required between the channel list manager and the signal reception controller.

The procedure of switching to the analogue channel can be started by submitting a request to switch the television receiver to the analogue channel, and next the channel is identified as analogue on the basis of its description by means of the signal reception controller and the request is passed on to the signal-receiving block controller to enable it to set the right reception parameters for the given channel. Next a check is made as to whether the signal has been found or not. The procedure ends its operation or starts the next signal scan, and when the channel is found, the procedure analyses it.

Analysis of the signal can start when the analogue signal-receiving block notifies a processor about a correct setting for the detected signal. Next, it is assumed that the given channel contains a video and audio signal in the case of a television channel. A PMT (*Program Map Table*) table is created next or as a part of information typically sent in the form of a PMT table to the given analogue channel. Next, information about the table is submitted to a signal processing block and the given channel is handled in the same way as digital channels. Further, the procedure starts the processes monitoring the data sources that allow establishing additional information about the channel, which is also able to include information from a teletext. Then, if the receiver obtains additional information about the analogue channel and its description is updated in the channel list manager.

The invention will now be described by way of example and with reference to the accompanying drawings in which:
Fig. 1A presents a block diagram of an analogue and digital television receiver;
Fig. 1 B presents a structure of an analogue signal-receiving block;
Fig. 2 presents a block diagram of modules for controlling a television signal process;
Fig. 3 presents organization of data related to available streams and television channels;
Fig. 4 presents a description of a stream;
Fig. 5 presents a description of a channel;
Fig. 6 presents a block diagram of a procedure of scanning an analogue band;
Fig. 7 presents a block diagram of a procedure for selecting analogue channel identifiers;
Fig. 8 presents a block diagram of a procedure for switching to an analogue channel;
Fig. 9 presents a block diagram of a procedure performed after a correct setting of the signal receiving block, creating PSI data for the received analogue channel; and
Fig. 10 presents a definition of the PMT table.

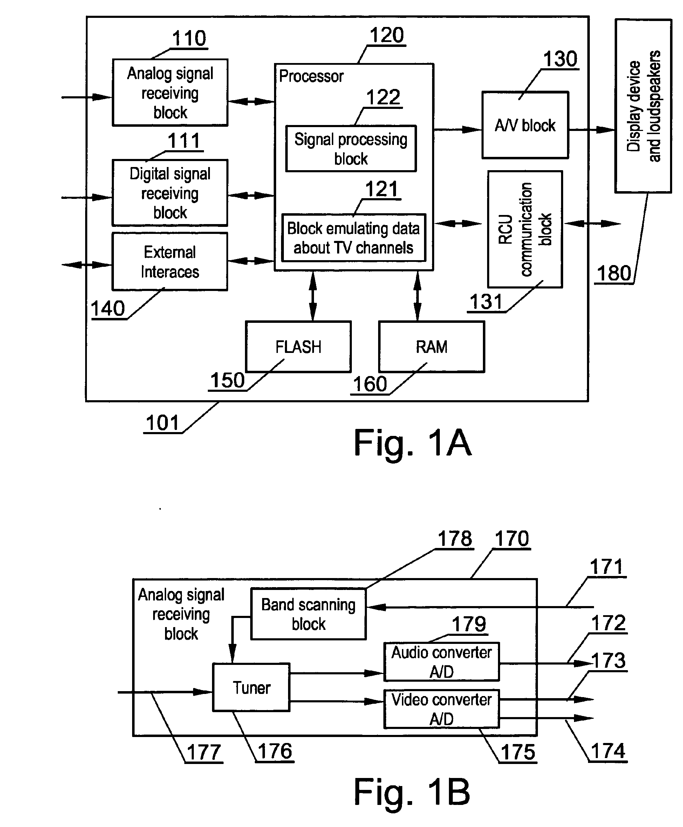

The signal receiver, being, for example, an analogue and digital television decoder, is presented in fig. 1A. It is a simplified version that contains only elements required for presenting the idea of the invention. The analogue and digital television receiver 101 contains many modules. The most important of them is the processor 120, which manages the operation of the receiver. The processor contains a signal processing block 122. Additionally the processor contains an internal block 121 controlling emulation of digital television channels received from the analogue signal-receiving block 110. A signal is passed from the digital signal-receiving block 111 and a signal from the analogue signal receiving block 110 is passed to the processor. Additionally, the processor has a possibility of bidirectional transmission of data via the external interfaces 140. The receiver also contains several types of memory, which are bidirectionally connected with the processor. These consist of the following: a non-volatile memory (for example, FLASH type 150) and an operational memory RAM 160. Programs controlling the operation of the receiver are stored in these memories. The A/V blocks 130 and the block of communication with the remote control 131 make it possible to transmit the output A/V signal to a display device and loudspeakers 180 and communicate with external control devices respectively, for example a remote control.

Fig. 1 B presents a structure of an analogue signal receiving block 170. It contains a band scanning block 178, usually fulfilled by means of software, which controls the tuner 176 receiving the analogue audio/video signal 177. The audio converter A/D 179 of the analogue audio signal to the digital signal passes the digital signal to the output 172. This converter can also check if a given signal is being broadcast in a particular form, for example, as mono or stereo signal. The video converter A/D 175 of the analogue video signal to the digital signal, also outputs digital data, teletext for example 174, in addition to the video signal 173.

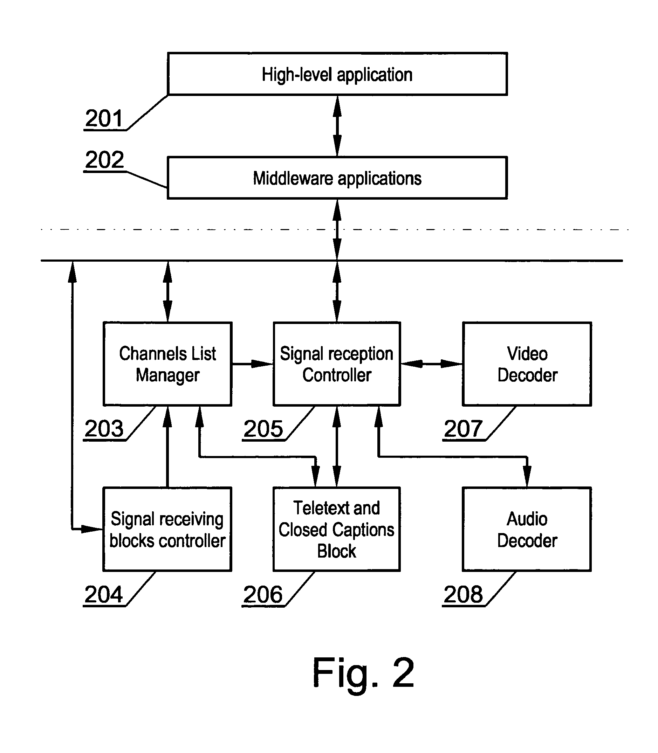

Fig. 2 presents a block diagram of modules controlling television signal processing. These modules, realized by means of software or hardware, supervise data processing in the decoder, which receives both analogue and digital television signals. In the majority of cases, the video signal decoder 207 is realized by means of hardware, but it can be a program, read from the memory of the receiver 150 and executed by the processor 120. The solution, according to the invention adds low-level applications in such a way that the middleware applications 202, such as MHP for example, and high-level applications 201, operate as if all the available television channels were digital. In case of the MHP system and other similar ones, defined by various standards, it is a priority to maintain compatibility with the middleware interface, because high-level applications, delivered by different companies, use one system of middleware applications. In the mentioned layer of low-level applications, two modules have the main functions, the first of which is the channel list manager 203, and the second is the signal reception controller 205. The channel list manager 203 manages all the received television signals and stores the database of information about the available streams and channels. In turn, the signal reception controller 205 controls reception of television signals by means of the controller block of signal receiving blocks 204, communicates with decoders of audio signals 208 and video signals 207 and exchanges data with the block for reception of teletext 206 or information in the system of *'closed captions',* as applied in the USA, and makes it possible to broadcast, for example, text data, displayed on the screen of the receiver, which is interconnected with the speaker units for television programs. The last block is block 204, which is the controller of analogue television signal 110 and digital television signal 111 receiving blocks presented in fig. 1 A.

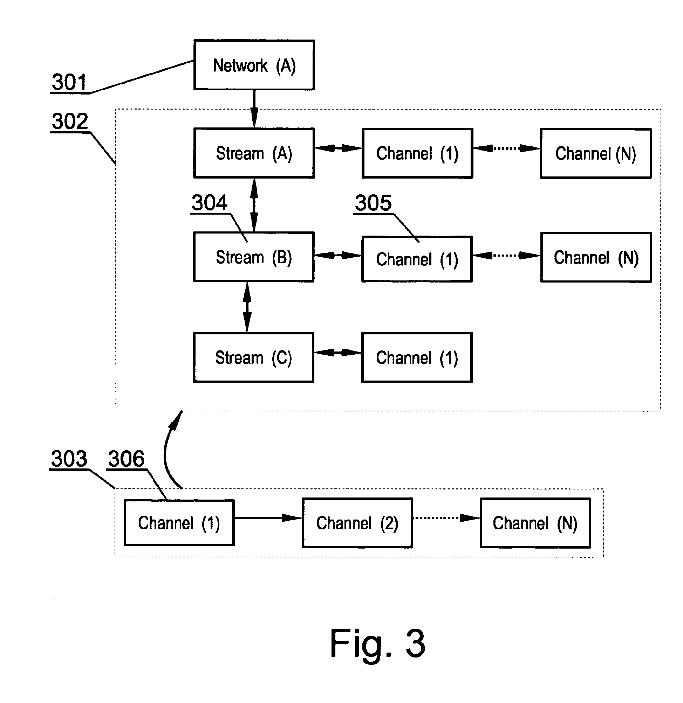

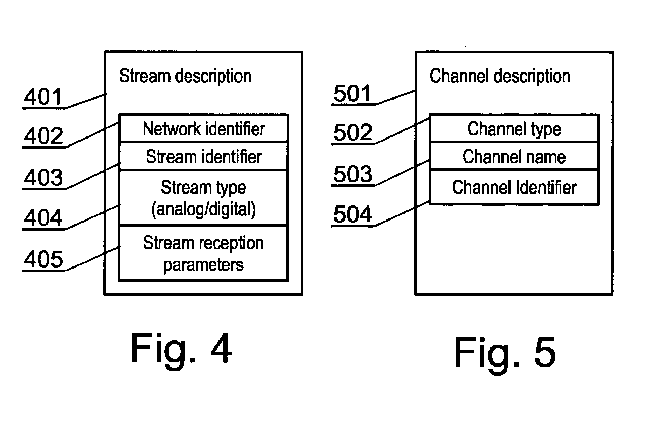

Fig. 3 presents the organization of the structure of data about the available television streams and channels. In the television decoder, television channels can originate from different sources (television networks) 301. Such structure can contain multiple streams 302. In case of digital television streams, one stream 304 can contain many television channels 305. In case of analogue television channels, which are emulated as digital data, such a stream can contain only one television channel. In the drawing, the A and B streams are digital television streams, and the C stream originates from an analogue signal source. Detailed data about the description of the analogue and digital streams in the structure of PSI data are presented in Fig. 4 and Fig. 5. Additionally, there are television channel lists 303 in the system, and are included for use by the high-level applications. For example, such lists can contain television channels about the subject matter of sports 306, which originate from different signal sources. However, it is a transparent system for applications, and references to all the types of channels are made in the same way both at high-level (application with the channel list) and middleware level of the application layer (MHP for example). The structure of data about the available streams and television channels is stored in the signal reception controller block 205.

Fig. 4 presents a description of a stream 401. This consists of four category-fields. The first field 402, with the value broadcast by the operator in digital streams, is the network identifier. In case of analogue signal sources, according to the invention, this field takes a zero value, which is an unacceptable value (defined as *illegal*), according to the DVB standard (with the full name of *Digital Video Broadcasting*). Compliance of the high-level and middleware software is maintained thanks to such marking. At the same time the analogue streams are identified for the lower software layer and drivers. The field 403 of the description is the stream identifier. Its value is set by the decoder to the next free number in a given stream system. The field 404 defines the stream type (with the full English name of *delivery type*), for example as the analogue or digital. The last group of parameters 405, are the television stream reception parameters (*delivery parameters*), for example signal frequencies that determine the method of retrieving data by the television receiver.

Fig. 5 presents the exemplary description of a channel 501. This description consists of fields of three categories. The most important field, the value of which in digital channels is broadcast by the operator, is the channel identifier 504. In case of analogue television, every stream is assigned to one channel with the identifier of 1. The channel type is determined in field 502, for example, if the analogue frequency lies within television or radio range, the type of the channel can be set as television or radio, depending on the frequency. The name of the channel is determined in field 503. In case of analogue channels, their names can be, for example, fetched from the teletext or a system of *'closed captions'* as applied in the USA.

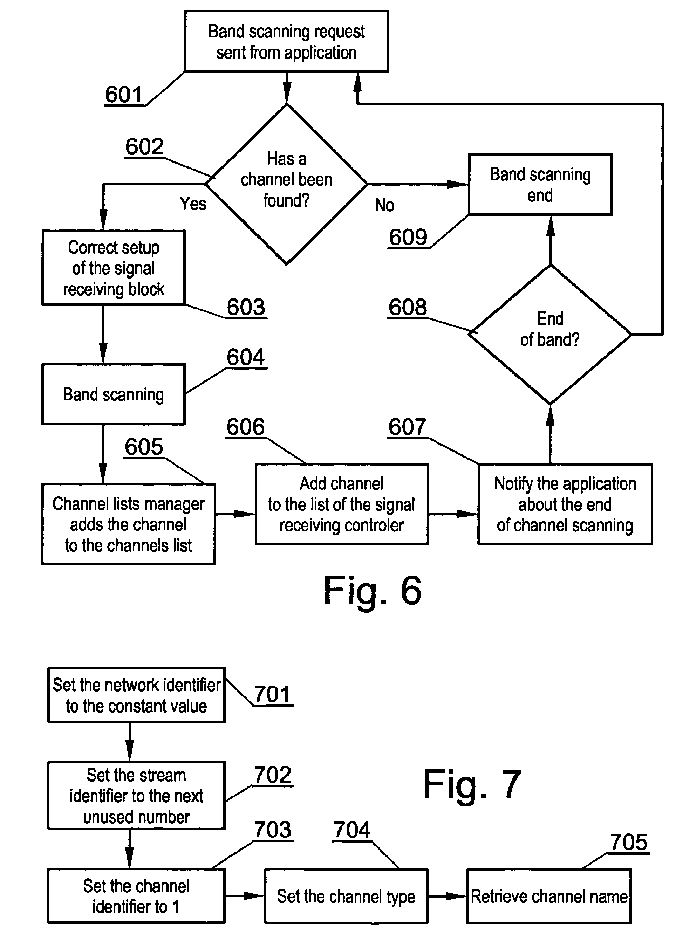

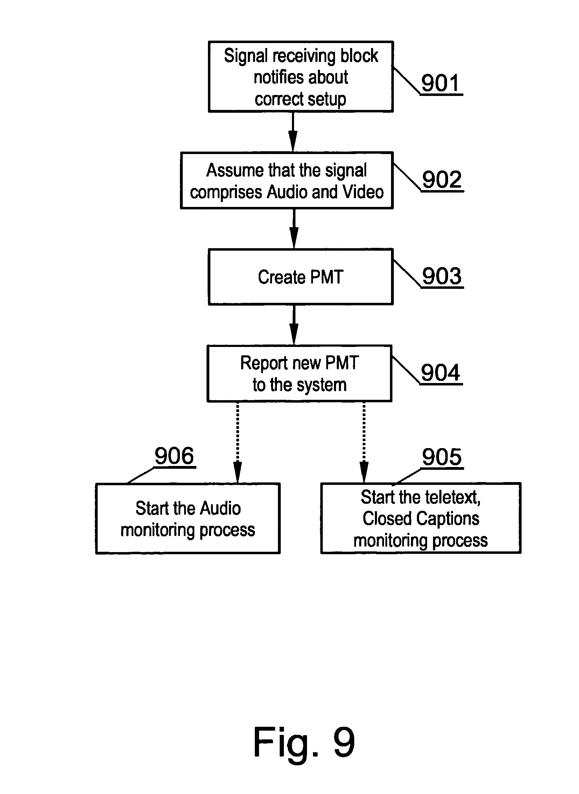

Because digital data processing is much simpler than analogue signal processing, the analogue signal in the solution presented here is converted to digital signal, and moreover the video and audio data are complemented with data, which cause, that the analogue signal is treated by the circuits of the television signal as a digital radio or television signal. Fig. 6 presents a procedure of scanning the analogue band, which can be conducted at the first startup of the receiver, after turning the receiver on or after switching the receiver to an analogue band channel. The procedure of scanning the analogue band is started in step 601 from a request, sent to the analogue signal receiving block, in order to scan the analogue band. Next, in step 602, it is checked if there was a television channel signal found in the scanned band. If not, the procedure ends its operation at step 609. In opposite case, when the channel was found, the procedure moves to step 603, which is made more detailed in the Fig. 9. In this step, the system is informed about the correct setting of the analogue signal receiving block 110 to the preset channel. Next, in step 604, the set frequency is scanned. Next, in step 605, the channel list manager adds the found channel to the channel list. The list of streams and channels and their parameters were presented in Figs. 3, 4 and 5. Next, in step 606 of the procedure, the channel is added to the channel list of the signal reception controller. This step is optional and applied in case, when there is a logical division required between the channel list manager 203 and the signal reception controller 205. Next, in step 607 of the procedure, applications are informed about the end of frequency scanning for a given channel. In step 608, it is checked if the end of the bandwidth was reached and if it is so, the procedure ends scanning of the band in step 609. In the opposite case, when there was still a band to be scanned left, the procedure moves to step 601.

Fig. 7 presents a procedure of selecting identifiers of the analogue channel. It starts in step 701, where the network identifier (with the proper name in English of *original network ID*) is set to a permanent value, in the example of the embodiment this value is equal to 0, it is *'DVB illegal'.* Next, in step 702 the stream identifier is set to the next free number, and in step 703 of the procedure the channel identifier is set to 1. Next, in step 704 the channel type is determined, for example, if the analogue frequency is contained in the television or radio range, the channel type can be set to television or radio depending on the applied frequency. The last step 705 is to fetch the name of the channel, for example from the teletext data.

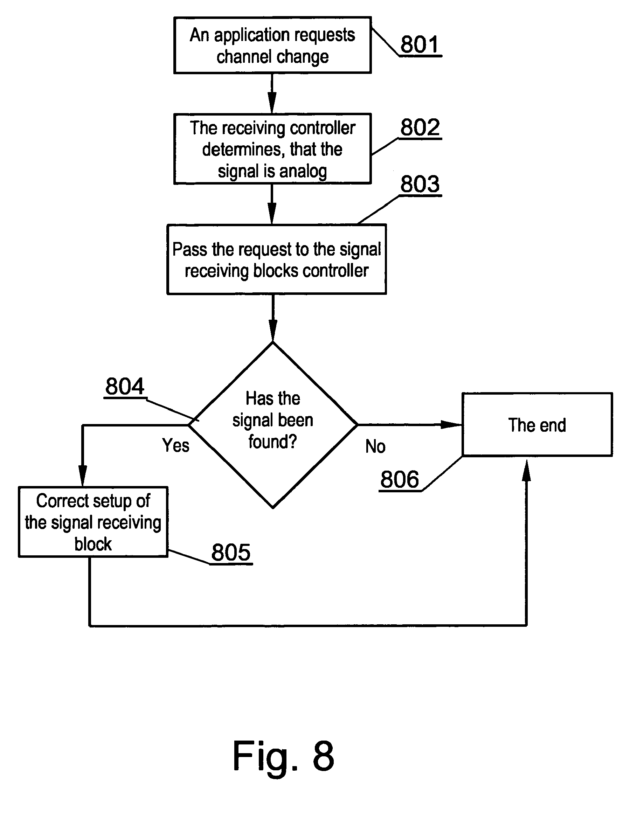

Fig. 8 presents a procedure of switching to a specific channel, for example an analogue channel. It starts in step 801, where the application submits a request of switching the television receiver to a specific channel. Next, in step 802 of the procedure, the signal reception controller identifies the channel as analogue, on the basis of its description. Next, in step 803, a request is sent to the controller of signal receiving blocks, so that it can set appropriate reception parameters for a given channel. In step 804 of the procedure, it is checked if the signal was found. If the television signal was not found, the procedure ends its operation in step 806 or starts to retrieve the signal again. In the opposite case, when the channel was found, the procedure moves to step 805, which is presented in details in Fig. 9.

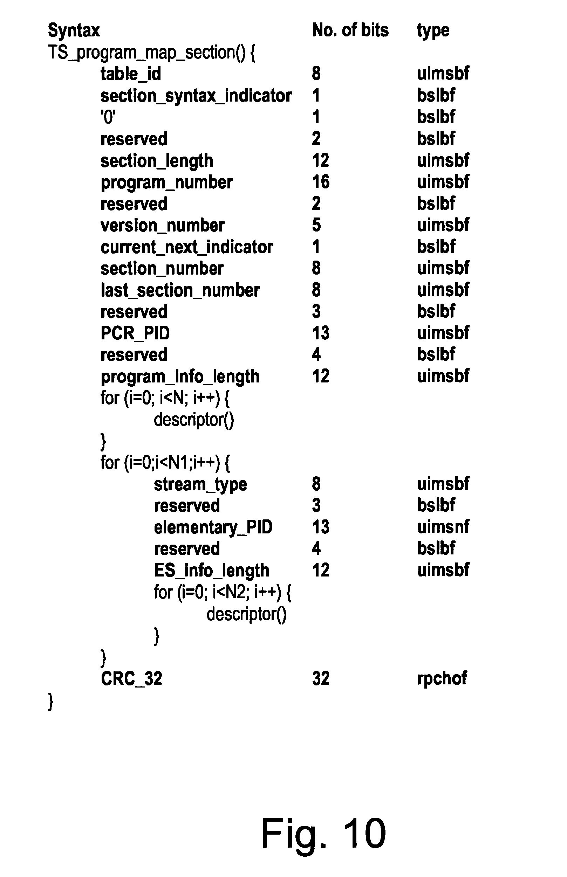

Fig. 9 presents a procedure performed after the signal is found and signal receiving block is set correctly. The procedure creates PSI data for the received analogue channel. This procedure conducts emulation of the analogue signal by completing information about the analogue signal, according to the method applied at the description of digital channels, to the form, which is regarded by the decoder blocks to be a digital signal. In step 901 of the procedure, the analogue signal receiving block notifies the system about the correct setting to a preset signal. Next, in step 902 of the procedure, it is assumed that the given channel contains a video and audio signal in case of television signal. Further, in step 903 of the procedure, there is a PMT table created (with the full English name *Program Map Table*), defined in the ISO/IEC13818-1 standard, shown in the Fig. 10) for the given analogue channel or information is created, which in a typical digital television data stream is sent in the form of the PMT table. In step 904 the table is submitted to the system of the television receiver and the given channel is handled in the same way as digital channels. Next, the procedure starts two processes, which monitor the data sources, making it possible to determine, which audio channels are available and if it is possible to fetch the channel name or teletext. The process monitoring the audio signal in step 906 tracks if there was a stereo mode detected or a change of sound to mono occurred, which can happen at a change of the broadcasted programs at a given channel. It is still possible to detect a situation of a double mono signal, when there are audio paths broadcasted in the left and right channel in two languages, for example. Depending on the currently detected audio mode, the PMT table of the channel is modified, and there is a message submitted to the system about the update of the table. Moreover, the process in step 905 monitors if there are, for example, teletext data or *'closed captions'* received. If it finds that such data are received, the content of the PMT table, which describes the given channel, is modified. From the data of the teletext or *'closed captions'* one can read the name of the channel, the level of parental control or information about television programs and channels.

In the presented solution, the PMT table, shown in Fig. 10, or information, which in a typical digital television data stream is sent in the form of the PMT table, is created at every switching of the receiver to the analogue channel. There is also a possibility for an additional cache memory to be used, where the recently created PMT tables would be stored. Thanks to this the PMT tables need to be created less frequently than at every change of the channel to analogue. The PMT table of the analogue signal, presented in fig. 10 is identical to the table of the channel in which data is sent digitally. At its creation, the PMT table is assigned with the next free number, and data characteristic of the given channel is provided.

According to the invention, data is created in the receiver about the analogue stream, usually being sent in the form of PMT tables in the case of digital channels. It has the purpose of standardizing the method of data processing in the receiver of both digital and analogue signals. The data, which describes the given channel, is stored in the form of PMT tables or directly in the form of the database illustrated in Figs. 3 and 4.

Referring to the definition of the PMT table for the analogue channels according to the invention, created are at least data contained in the fields program_number, version_number and the data described by the second loop *"for",* it is the description of the streams, connected with a given channel. The stream is described by a type, PID number, generated locally in the receiver not causing conflicts, and a set of information describing the content of the stream (the field descriptor()). For example such stream is a stream of audio, video or teletext data or a stream of data with captions complementing the voice of the speaker. The field version_number can also be used in case of making updates in the database with information about television channels.

Because there is usually a database in the receiver's containing data, which describe the channels available for the receiver, in case of analogue channels the data received in the form of PMT tables for the digital channels, can be created immediately in the format of a local database, but without the creation of a PMT table, which is usually a transitional status, before the local database of information about channels is created.

The presented solution illustrates a method of handling programs in the television receiver, which receives both analogue and digital signals. When a system compliant for example with the MHP specification, dedicated for digital television receivers is applied as a middleware software layer in case of a receiver for reception of both analogue and digital television signals, the mentioned software system is modified in such a way that it is possible to process the analogue television signals. The presented solution does not complement the specification of high-level or middleware applications, but introduces a low-level software, which emulates the analogue television signals as digital and creates for them the required PSI descriptions, connected with the MPEG standard, in such a way that the middleware and high-level applications do not change their architecture and method of operation.

The solution, according to the invention ensures a transparent access of the middleware MHP layer to the programs broadcasted in analogue form. The presented method of embodiment of the system resolves the problem of management of analogue channels in the receiver but not the problem of access to IP data. In the presented embodiment of the system, emulation of analogue channels as digital is applied, and not the SI data, but the PSI data with which the MPEG specifications are managed.

The example of the television receiver, described above, in which the solution was applied according to the invention, should be treated as one of possible application of the method of emulating analogue channels as digital. Every device, including also a decoder, which receives both analogue and digital television signals, can be designed in such a way that the method of emulation, according to the invention, can be used and at the same time remains in full compliance with the standard of the middleware software layer and the high-level applications.

The analogue television channels are recognized by the middleware and high-level applications as digital, which in effect provides a possibility for the existence of one interface to handle the receiver in the system. Analogue television signals are converted in the receiver to the digital form by means of *'audio digitizer*' converter modules for the audio signals and *'video digitizer'* for the video signals as shown in Fig. 1 B. The analogue channels are assigned with identification numbers and appropriate descriptions, and information is stored in the PSI database about channels available. According to the invention, other data sources from the analogue signals, for example teletext, are monitored additionally in order to determine any additional parameters of the received analogue signals.

## Claims

1. A receiver of analogue and digital television signals comprising an analogue signal receiving block (110), a digital signal receiving block (111), A/V blocks (130), and a processor (120) provided with a signal processing block (122), **characterised in that** a digital signal received by said digital signal receiving block (111) is passed directly to said signal processing block (122), whereas an analogue signal received by said analogue signal receiving block (110) is passed to said signal processing block (122) via a channel emulating block (121) of said receiver, said channel emulating block (121) being adapted to emulate an analogue channel as a digital channel by converting the analogue signals of said channel to digital form and creating at least a network identifier and a channel identifier for the emulated channel, said receiver further comprising a database in which the network and channel identifiers of emulated channels are stored in the same format as the stored network and channel identifiers of digital channels, said signal processing block (122) processing the digital signals of the digital and emulated channels to output A/V signals which it supplies to said A/V blocks (130).

2. The receiver of analogue and digital television signals according to claim 1, **characterised in that** the processor (120) is provided with a channel list manager block (203) storing information about available digital channels and analogue channels including information related to the network and channel identifiers, a video decoder (207) and an audio decoder (208) located in the signal processing block (122) for decoding digital data, and a signal reception controller (205) for controlling reception of signals and managing procedures of handling the analogue channels and the video and audio decoders (207, 208), a controller of television signal reception blocks (204) for controlling the analogue signal receiving block (110) and the digital signal receiving block (111).

3. The receiver of analogue and digital television signals according to claim 2, **characterised in that** for analogue channels in the block (121)for emulating analogue channels as digital channels there is created locally a stream identifier contained in the information about available channels.

4. The receiver of analogue and digital television signals according to claim 1, **characterised in that** in the processor (120) there is located a block for handling teletext (206) or *'closed captions'* data.

5. A method of receiving analogue and digital television signals by a receiver with a signal processing block, **characterised in that** when digital television signals are received said digital signals are passed directly to said signal processing block, whereas when analogue television signals are received, said analogue signals are passed to said signal processing block via an emulating block of said receiver, said emulating block emulating an analogue channel as a digital channel by converting the analogue signals into digital signals and creating at least a network identifier and channel identifier for the emulated channel, said identifiers being stored in a database of said receiver in the same format as stored network identifiers and channel identifiers of digital channels.

6. The method of receiving analogue and digital signals according to claim 5, **characterised in that** for the analogue channels, a stream identifier created locally within the receiver is added to information about the channels.

7. The method of receiving analogue and digital signals according to claim 5, **characterised in that** information about analogue channels is generated by low-level software.

8. The method of receiving analogue and digital signals according to claim 7, **characterised in that** identification numbers and descriptions are assigned to the analogue channels by low-level software.

9. The method of receiving analogue and digital signals according to claim 7, **characterised in that** information about the analogue channels is fetched from the teletext or *'closed captions'.*

10. The method of receiving analogue and digital signals according to claim 5, **characterised in that** the analogue television signals are converted within the receiver into the digital signals by 'audio digitizer' modules for audio signals and 'video digitizer' for video signals.

11. The method of receiving analogue and digital signals according to claim 5, **characterised in that** scanning of an analogue band is started from a request to scan the analogue band submitted to an analogue signal receiving block, next, it is checked, if there was a television channel signal found in the analogue band, and if it was not found, the procedure ends its operation while in the opposite case, when a channel was found, the procedure notifies a processor about the correct setting of the analogue signal receiving block to the preset channel, subsequently, the preset frequency is scanned, and next a channel list manager adds the found channel to a channel list, next, the application, which submitted the request for scanning is informed about the end of the frequency scanning and further a check is made, if the end of the band was reached and if the end was reached, the procedure ends its operation, while in the opposite case, when there was still a band left for scanning, the procedure returns to the beginning.

12. The method of receiving analogue and digital signals according to claim 11, **characterised in that** the channel is added to a signal reception controller list, when there is a logical division required between the channel list manager and a signal reception controller.

13. The method of receiving analogue and digital signals according to claim 5, **characterised in that** a procedure of switching into the analogue channel is started by the application that submits a request to switch the television receiver to the analogue channel, and next the channel is identified as analogue on the basis of its description by means of a signal reception controller and the request is sent to a controller of signal receiving blocks, so that it sets the appropriate parameters for reception of a given channel, subsequently, it is checked if the signal was found and if it was not found, the procedure ends it operation or starts searching for signal again, and when the channel is found, the procedure analyses such signal.

14. The method of receiving analogue and digital signals according to claim 5, **characterised in that** signal analysis starts when an analogue signal reception block notifies a processor about a correct setting to the preset signal, next, it is assumed that the given channel contains a video and audio signal in case of a television signal and next, there is a PMT (*Program Map Table*) table created or a part of information typically sent in the form of the PMT table for a given analogue channel, next, the table is submitted to a signal processing block and the given channel is handled in the same way as digital channels, further the procedure starts the processes, monitoring the data sources, which make it possible to define additional information about the channel, such additional information can include information from teletext, subsequently, if the receiver obtains additional information about the analogue channel, it updates description of this analogue channel in a channel list manager.

## Patentansprüche

1. Das Empfänger für analoge und digitale Fernsehsignale und einen Empfangsblock (110) für analoge Signale, einen Empfangsblock (111) für digitale Signale, AV-Blöcke (130) sowie einen Prozessor (120) in dem sich ein Signalverarbeitungsblock (122) befindet enthaltend, **dadurch gekennzeichnet, dass** das von dem Empfangsblock (111) für digitale Signale empfangene digitale Signal direkt auf den Signalverarbeitungsblock (122) übertragen wird, wobei das von dem Empfangsblock (110) für analoge Signale empfangene analoge Signal über den Kanal-Emulationsblock (121) des Empfängers an den Signalverarbeitungsblock (122) weitergeleitet wird und der Kanal-Emulationsblock (121) wird an die Emulation des analogen Kanals als digitaler Kanal durch Konvertierung der analogen Signale des Kanals in digitale Form sowie durch Bildung von mindestens einem Netz- und Kanalidentifikator für einen emulierten Kanal angepasst, wobei das Empfangsgerät zusätzlich eine Datenbank besitzt, in der die Netz- und Kanalidentifikatoren dieser emulierten Kanäle in ebensolchem Format wie die Netzidentifikatoren und Identifikatoren der erwähnten digitalen Kanäle gespeichert werden, und dabei werden in dem Signalverarbeitungsblock (122) die digitalen Signale der Digitalkanäle sowie der emulierten Kanäle verarbeitet, die A/V-Signale werden zum Ausgang gesendet und diese Signale werden auf die A/V-Blöcke (130) übertragen.

2. Das Empfänger für analoge und digitale Fernsehsignale nach Anspruch 1, **dadurch gekennzeichnet, dass** der Prozessor (120) einen Administratorblock (203) für die Kanalliste enthält und zu den Informationen über die verfügbaren digitalen Kanäle sowie über den Netz- und Kanalidentifikator gehören außerdem ein Videodecoder (207) und Audiodecoder (208) zur Decodierung von digitalen Daten, die sich in dem Signalverarbeitungsblock (122) befinden sowie ein Signalempfangs-Prüfer zur Empfangskontrolle von Signalen und zur Verwaltung von Vearbeitungsverfahren der Kanäle sowie Video- und Audiodecoders (207, 208) und ein Prüfer (204) der Empfangsblöcke von Fernsehsignalen, der den analogen Signalempfangsblock sowie den digitalen Signalempfangsblock (111) steuert.

3. Das Empfänger für analoge und digitale Fernsehsignale nach Anspruch 1, **dadurch gekennzeichnet, dass** für die analogen Signale im Emulationsblock für analoge Kanäle als digitale Signale ein Strahlprüfer gebildet wird, enthaltend in der Information über die verfügbaren Kanäle.

4. Das Empfänger für analoge und digitale Fernsehsignale nach Anspruch 1, **dadurch gekennzeichnet, dass** der Prozessor (120) den Block der Text- (206) oder Datenbedienung *'closed captions'* enthält.

5. Das Empfangsverfahren für analoge und digitale Fernsehsignale mit dem den Signalverarbeitungsblock enthaltenden Empfangsgerät **dadurch gekennzeichnet, dass** beim Empfang von digitalen Fernsehsignalen diese direkt zum Signalverarbeitungsblock weitergeleitet werden und beim Empfang von analogen Fernsehsignalen werden diese über den Emulationsblock des Empfangsgerätes zu dem Signalverarbeitungsblock weitergeleitet, dabei emuliert der Emulationsblock den analogen Kanal als digitalen Kanal durch die Konvertierung der analogen Signale in digitale Signale, wobei mindestens ein Netz- und Kanalidentifikator für den emulierten Kanal gebildet wird und die Identifikatoren in der Datenbank des Empfangsgerätes in ebensolchem Format gespeichert werden wie die Netz- und Kanalidentifikatoren der erwähnten digitalen Kanäle.

6. Das Empfangsverfahren für analoge und digitale Fernsehsignale nach Anspruch 5, **dadurch gekennzeichnet, dass** für die analogen Kanäle lokal ein Strahlidentifikator im Empfangsgerät gebildet wird, hinzugefügt der Information über die Kanäle.

7. Das Empfangsverfahren für analoge und digitale Fernsehsignale nach Anspruch 5, **dadurch gekennzeichnet, dass** die Informationen über analoge Kanäle mit Hilfe von Software niedrigen Niveaus erzeugt werden.

8. Das Empfangsverfahren für analoge und digitale Fernsehsignale nach Anspruch 7, **dadurch gekennzeichnet, dass** mit Hilfe von Software niedrigen Niveaus den analogen Kanälen die Identifizierungsnummern und Beschreibungen zugewiesen werden.

9. Das Empfangsverfahren für analoge und digitale Fernsehsignale nach Anspruch 7, **dadurch gekennzeichnet, dass** die Informationen über die analogen Kanäle dem Teletext oder den '*closed captions*' entnommen werden.

10. Das Empfangsverfahren für analoge und digitale Fernsehsignale nach Anspruch 5, **dadurch gekennzeichnet, dass** die Signale des digitalen Fernsehens in dem Empfangsgerät in digitaler Form durch '*audio digitizer'-*Module für Audiosignale und durch '*video digitizer'* für Videosignale konvertiert werden.

11. Das Empfangsverfahren für analoge und digitale Fernsehsignale nach Anspruch 5, **dadurch gekennzeichnet, dass** das Absuchen des Analogbands mit der Scannensforderung des Analogbands zu dem Block des analogen Signalempfangs startet und danach überprüft wird, ob in dem gescannten Band das Signal des Fernsehkanals gefunden wurde, wenn dies nicht der Fall ist, endet die Prozedur oder im Falle, dass das Signal gefunden wurde, berichtet informiert die Prozedur den Prozessor über die korrekte Einstellung des analogen Signalempfangsblocks auf dem gewünschten Kanal, danach wird die ausgewählte Frequenz gescannt und der Kanallisten-Administrator fügt den gefundenen Kanal der Kanalliste hinzu und zunächst wird die Applikation, die die Scannensforderung gemeldet hat, über den Abschluss des Frequenzscannens informiert und danach erfolgt eine Prüfung, ob das Bandende erreicht wurde und wenn das Bandende erreicht ist, endet die Prozedur, und wenn das Band noch zu scannen ist, beginnt die Prozedur erneut.

12. Empfangsverfahren für analoge und digitale Fernsehsignale nach Anspruch 11, **dadurch gekennzeichnet, dass** der Kanal auch der Prüferliste des Signalempfangs hinzugefügt wird, wenn eine logische Verteilung zwischen dem Kanallisten-Administrator und dem Signalempfang-Prüfer gefordert wird.

13. Empfangsverfahren für analoge und digitale Fernsehsignale nach Anspruch 5, **dadurch gekennzeichnet, dass** die Prozedur der Umschaltung auf den analogen Kanal eine Applikation aktiviert, indem sie die Umschaltungsforderung des Fernsehempfangsgerätes auf den analogen Kanal meldet, danach identifiziert sich der Kanal als analog aufgrund seiner Beschreibung mit Hilfe der Signalempfangsprüfung und schickt die Forderung zur Signalempfangsblock-Prüfung, damit diese die richtigen Empfangsparameter des entsprechenden Kanals einstellt und danach wird überprüft, ob das Signal gefunden wurde, wurde das Signal nicht gefunden, endet die Prozedur und die Funktion Signalsuche wird erneut aktiviert und wenn das Signal gefunden wurde, setzt die Prozedur dessen Analyse durch.

14. Empfangsverfahren für analoge und digitale Fernsehsignale nach Anspruch 5, **dadurch gekennzeichnet, dass** die Analyse des Signals beginnt, wenn der Block des analogen Signals dem Prozessor eine entsprechende Einstellung des gewünschten Kanals meldet, zunächst angenommen, dass ein entsprechender Kanal das Video- und Audiosignal im Falle des Fernsehkanals enthält, danach wird die PMT-Tabelle (*Program Map Table*) oder der Teil an Informationen, die typischerweise in Form einer PMT-Tabelle an den entsprechenden analogen Kanal übertragen werden, gebildet und zunächst wird die Tabelle dem Signalverarbeitungsblock gemeldet und der entsprechende Kanal wird als digitaler Kanal bedient, danach betätigt die Prozedur solche Prozesse, die die Datenquellen überwachen und diese Datenquellen ermöglichen die Feststellung zusätzlicher Informationen über den Kanal - zum Beispiel von Informationen aus dem Teletext und danach erhält das Empfangsgerät zusätzliche Informationen über den analogen Kanal, aktualisiert er seine Beschreibung im Kanallisten-Administrator.

## Revendications

1. Le récepteur des signaux de télévision analogique et numérique contenant un bloc (110) de réception de signaux analogiques, un bloc (111) de réception de signaux numériques, des blocs A/V (130) et un processeur (120) contenant un bloc (122) de conversion du signal **caractérisé en ce que** le signal numérique reçu par le bloc (111) de réception des signaux numériques est transmis directement au bloc (122) de conversion du signal, tandis que le signal analogique reçu par le bloc de réception des signaux analogiques (110) est transmis au bloc de conversion du signal (122) par le bloc d'émulation des canaux (121) du récepteur, tandis que le bloc d'émulation des canaux (121) est adapté à l'émulation analogique du canal au tant que canal numérique par la conversion des signaux analogiques du canal en forme numérique et la création au moins d'un identificateur de réseaux et d'un identificateur de canaux pour le canal émulé, tandis que le récepteur contient en plus une base de donnée où les identificateurs des réseaux et des canaux de ces canaux émulés sont sauvegardés dans le même format que les identificateurs des réseaux et des canaux des canaux numériques mentionnés sont sauvegardés où dans le bloc de conversion du signal (122) les signaux numériques des canaux numériques et des canaux émulés sont convertis et où l'on expose à la sortie les signaux A/V qui sont transmis aux blocs A/V 130.

2. Le récepteur des signaux de télévision analogique et numérique selon la revendication 1, **caractérisé en ce que** le processeur (120) contient un bloc (203) de gestion des listes des canaux qui sauvegarde les informations sur les canaux aussi bien numériques que analogiques accessibles, tandis que les informations sur les identificateurs de réseaux et sur les identificateurs de canaux, le décodeur vidéo (207) et le décodeur audio (208) inclus dans le bloc de conversion du signal (122) pour décoder les données numériques ainsi qu'un contrôleur de réception du signal (205) pour le contrôle de la réception des signaux et pour la gestion des procédures de conversion des canaux et des décodeurs (207, 208) vidéo et audio, le contrôleur (204) des blocs de réception des signaux télévisuels commandant le bloc (110) de réception des signaux analogiques et le bloc (111) de réception des signaux numériques font partie des informations sur les canaux.

3. Le récepteur des signaux de télévision analogique et numérique selon la revendication 2, **caractérisé en ce qu'**un identificateur du flux inclu dans l'information sur les canaux accessibles se crée pour les canaux analogiques dans le bloc (121) d'émulation des canaux analogiques en canaux numériques.

4. Le récepteur des signaux de télévision analogique et numérique selon la revendication 1, **caractérisé en ce que** le processeur (120) contient le bloc de traitement du télétexte (206) ou des données *'closed captions'.*

5. Le procédé de réception des signaux de télévision analogique et numérique par le récepteur contenant le bloc de conversion du signal **caractérisé en ce que** lorsque les signaux télévisuels numériques sont reçus ils sont directement transmis au bloc de conversion du signal, cependant lorsque les signaux télévisuels analogiques sont reçus ils sont transmis au bloc de conversion du signal par le bloc d'émulation du récepteur mentionné, tandis que le bloc d'émulation émule le canal analogique en canal numérique par la conversion des signaux analogiques en signaux numériques et au moins un identificateur de réseaux et un identificateur de canaux se crée pour le canal émulé, tandis que les identificateurs sont sauvegardés dans la base de données dans le même format que les identificateurs des réseaux et des canaux des canaux numériques mentionnés sont sauvegardés.

6. Le procédé de réception des signaux de télévision analogique et numérique selon la revendication 5, **caractérisé en ce qu'**un identificateur de flux qui s'ajoute aux informations sur les canaux se crée localement dans le récepteur.

7. Le procédé de réception des signaux de télévision analogique et numérique selon la revendication 5, **caractérisé en ce que** l'information sur les canaux analogiques est générée à l'aide d'un logiciel de bas niveau.

8. Le procédé de réception des signaux de télévision analogique et numérique selon la revendication 7, **caractérisé en ce que** l'on attribue des numéros d'identification et des descriptions aux canaux analogiques à l'aide du logiciel de bas niveau.

9. Le procédé de réception des signaux de télévision analogique et numérique selon la revendication 7, **caractérisé en ce que** les informations sur les canaux analogiques sont télé chargées du télétexte ou des *'closed captions'.*

10. Le procédé de réception des signaux de télévision analogique et numérique selon la revendication 5, **caractérisé en ce que** les signaux télévisuels analogiques sont convertis dans le récepteur en forme numérique par les modules *'audio digitizer'* pour les signaux audio et *'video digitizer'* pour les signaux vidéo.

11. Le procédé de réception des signaux de télévision analogique et numérique selon la revendication 5, **caractérisé en ce que** l'exploration de la bande analogique commence par la demande de scanner la bande analogique pour le bloc de réception du signal analogique, ensuite on vérifie si le signal du canal télévisuel est retrouvé dans la bande scannée et s'il ne l'est pas alors la procédure s'achève, dans le cas contraire - lorsque le canal est retrouvé - la procédure informe le processeur sur le réglage correcte du bloc de réception du signal analogique sur le canal défini, après la fréquence réglée est scannée et ensuite la gestion des listes des canaux ajoute le canal retrouvé à la liste des canaux, après l'application qui a effectué la demande de scanner est informée sur l'achèvement du scannage de la fréquence, ensuite on vérifie si la fin de la bande est atteinte et si c'est le cas la procédure achève l'action, dans le cas contraire s'il reste une bande supplémentaire à scanner la procédure recommence.

12. Le procédé de réception des signaux de télévision analogique et numérique selon la revendication 11, **caractérisé en ce que** le canal s'ajoute également à la liste du contrôleur de réception du signal lorsque une division logique entre la gestion des listes des canaux et le contrôleur de réception des signaux est exigée.

13. Le procédé de réception des signaux de télévision analogique et numérique selon la revendication 5, **caractérisé en ce que** la procédure de commutation sur le canal analogique est entamée par l'application en déposant la demande de commuter le récepteur télévisuel sur le canal analogique et ensuite le canal est identifié comme analogique sur la base de son description à l'aide du contrôleur de réception du signal et une demande est envoyée au contrôleur des blocs de réception des signaux afin qu'il règle les paramètres corrects de réception du canal donné, après il est vérifié si le signal a été retrouvé et si le signal n'a pas été retrouvé alors la procédure achève son action ou recommence à nouveau la recherche du signal et si le canal est retrouvé la procédure effectue son analyse.

14. Le procédé de réception des signaux de télévision analogique et numérique selon la revendication 5, **caractérisé en ce que** l'analyse du signal commence lorsque le bloc de réception du signal analogique apporte au processeur les réglages corrects du signal défini, ensuite il est présumé que le canal donné contient un signal vidéo et audio dans le cas d'un canal télévisuel, après le tableau PMT *(Program Map Table)* ou une partie d'information transmise typiquement sous forme de tableau PMT est créé pour le canal analogique donné, ensuite le tableau est déclaré au bloc de conversion du signal et le canal donné est traité comme des canaux numériques, après la procédure enclenche les processus qui contrôlent les sources des données permettant l'établissement d'informations supplémentaires au sujet du canal auxquelles peuvent appartenir des informations du télétexte, ensuite si le récepteur obtient des informations supplémentaires sur le canal analogique il actualise sa description dans la gestion des listes des canaux.
